# EUROPÄISCHE PATENTSCHRIFT

(11) **EP 2 585 276 B1**
(45) Veröffentlichungstag und Bekanntmachung des Hinweises auf die Patenterteilung: **18.10.2017**
(21) Anmeldenummer: 11715653.9
(22) Anmeldetag: 08.03.2011
(51) Int. Cl.: B29C 69/00, B29C 65/10, B29C 45/00, B29C 45/33, B29C 45/04, B29L 22/00

(54) **VERFAHREN UND VORRICHTUNG ZUR HERSTELLUNG EINES BAUTEILS MITTELS SPRITZGIESSENS UND HEISSGASSCHWEISSENS**
METHOD AND DEVICE FOR PRODUCING A COMPONENT BY INJECTION MOULDING AND HOT GAS WELDING
PROCÉDÉ ET DISPOSITIF DE PRODUCTION D'UNE PIÈCE STRUCTURALE PAR MOULAGE PAR INJECTION ET SOUDAGE PAR GAZ CHAUD.

(30) Priorität: 31.07.2010 DE 102010032994; 23.06.2010 DE 102010024839
(43) Veröffentlichungstag der Anmeldung: 01.05.2013
(73) Patentinhaber: ElringKlinger AG, 72581 Dettingen (DE)
(72) Erfinder: HUMMEL, Volker, 73252 Lenningen (DE)
(74) Vertreter: Hoeger, Stellrecht & Partner Patentanwälte mbB
(86) Internationale Anmeldenummer: PCT/EP2011/001119
(87) Internationale Veröffentlichungsnummer: WO 2011/160734

(56) Entgegenhaltungen:
- EP-A1- 1 415 789
- EP-A1- 1 591 227
- DE-A1- 10 019 163
- DE-A1-102006 010 815
- JP-A- 7 016 945
- JP-A- S5 290 584
- JP-A- 10 166 449
- JP-A- 2007 296 700
- US-A- 4 450 038

## Beschreibung

Die Erfindung betrifft ein Verfahren zur Herstellung eines aus wenigstens zwei spritzgegossenen Kunststoffteilen bestehenden Bauteils mittels einer Spritzgussform, welche ein Werkzeug mit wenigstens zwei gegeneinander positionierbaren Werkzeugteilen aufweist, wobei zur Herstellung der Kunststoffteile das Werkzeug durch Zusammenfahren der Werkzeugteile geschlossen und Kunststoff in wenigstens zwei von den Werkzeugteilen begrenzte, beabstandet liegende Hohlräume eingespritzt wird, nach Herstellung der Kunststoffteile das Werkzeug geöffnet wird und darauf die Werkzeugteile, an welchen jeweils eines der Kunststoffteile gelagert ist, so positioniert werden, dass die Kunststoffteile in einer Schweißposition angeordnet sind, in welcher ein Heizelement in einen Zwischenraum zwischen den Kunststoffteilen eingebracht wird und durch das Heizelement miteinander zu verschweißende Randbereiche der Kunststoffteile erwärmt werden, worauf das Heizelement aus dem Zwischenraum entfernt wird und durch Schließen des Werkzeugs die Kunststoffteile so gegeneinander geführt werden, dass diese in ihren erwärmten Randbereichen in der Spritzgussform miteinander zu dem Bauteil verschweißt werden.

Ferner betrifft die Erfindung eine Vorrichtung gemäß dem Oberbegriff des Anspruchs 5.

Ein Verfahren der vorstehend erwähnten Art und eine Vorrichtung gemäß dem Oberbegriff des Anspruchs 5 sind aus der JP 10-166449 A bekannt.

Bauteile aus Kunststoff werden verstärkt in unterschiedlichen industriellen Bereichen eingesetzt. Insbesondere im Kraftfahrzeugbereich werden zur Herstellung von Kraftfahrzeugen verstärkt Bauteile aus Kunststoff eingesetzt.

Eine wesentliche Anforderung bei der Herstellung von derartigen Bauteilen sind die Genauigkeiten, mit welchen diese hergestellt werden, das heißt die zulässigen Toleranzen für derartige Bauteile werden sehr gering vorgegeben. Eine zusätzliche, wesentliche Anforderung besteht in vielen industriellen Applikationen in den Reinheitsanforderungen für die Bauteile, das heißt bei deren Herstellung müssen Verunreinigungen dieser Bauteile weitestgehend vermieden werden.

Daraus resultieren entsprechend große Anforderungen an die Herstellungsprozesse der Bauteile. Kunststoffteile, die zur Herstellung der Bauteile verwendet werden, werden üblicherweise im Spritzgußverfahren hergestellt. Die Herstellung von derartigen Kunststoffteilen kann zwar mit hoher Genauigkeit erfolgen. Problematisch sind jedoch das Handling und die weiteren Prozesse zum Verbinden derartiger Kunststoffteile.

Ein bekannter Prozess zum Verbinden zweier Kunststoffteile zur Herstellung eines Bauteils ist das Reibschweißen. Problematisch hierbei ist zum einen das Ausrichten, Greifen, Positionieren und Fixieren der Kunststoffteile, das mit eigens hierfür konzipierten Vorrichtungen durchgeführt werden muss. Abgesehen davon, dass damit ein erheblicher konstruktiver Aufwand verbunden ist, ist
hierbei nachteilig, dass bereits bei dem erforderlichen Handling der Kunststoffteile Verzüge auftreten können, die eine Ursache dafür sind, dass die vorgegebenen Toleranzen der herzustellenden Bauteile nicht eingehalten werden können. Weiter ist nachteilig, dass das Reibschweißen ein kontaktbehafteter Arbeitsvorgang ist, der zu weiteren Verzügen der Kunststoffteile und damit des Bauteils führen kann. Zudem können dadurch Verunreinigungen in dem herzustellenden Bauteil entstehen, so dass auch die Reinheitsanforderungen für das Bauteil nicht mehr erfüllt werden.

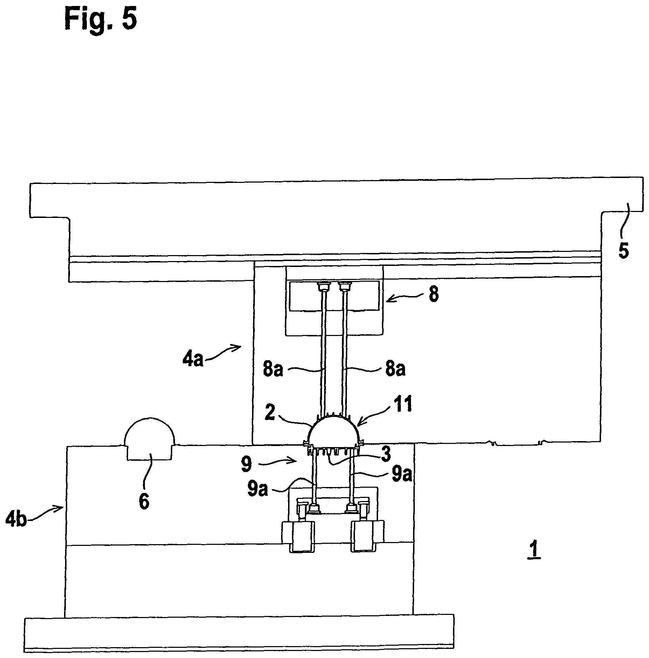

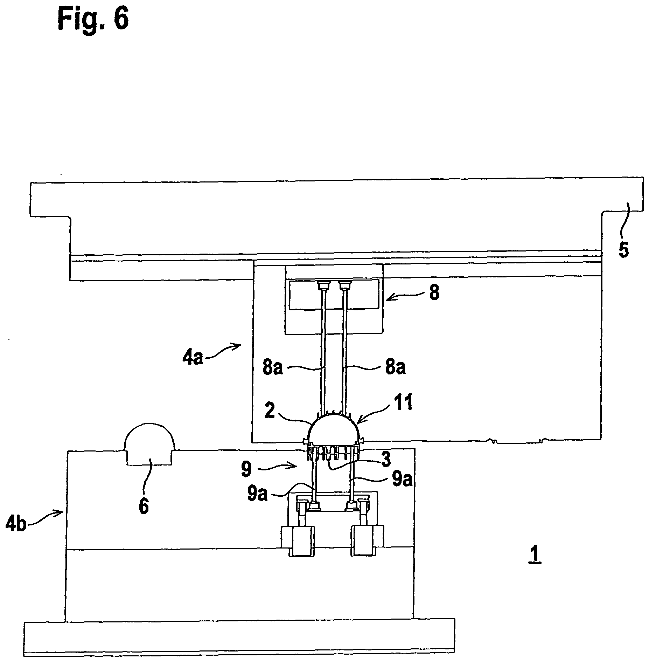

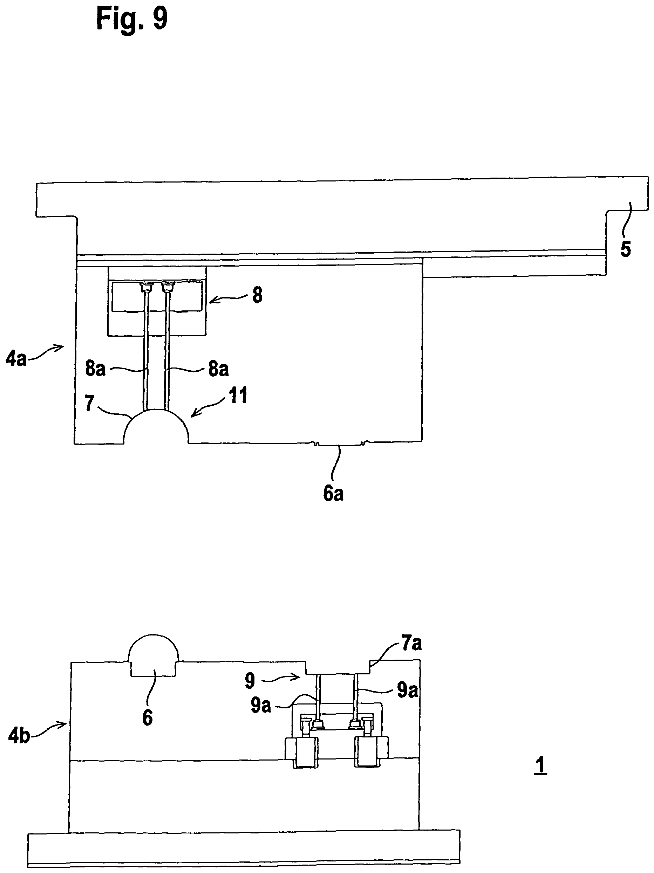

Nach der JP 10-166449 A werden zwei Halbschalen-artige thermoplastische Kunststoffteile im Spritzgussverfahren mittels eines zweigeteilten Spritzgusswerkzeugs hergestellt, worauf das Werkzeug geöffnet wird und die beiden Werkzeugteile so gegeneinander verschoben werden, dass sich die miteinander zu verschweißenden Randbereiche der beiden Kunststoffteile gegenüberliegen (Fig. 9). Anschließend wird das Werkzeug geöffnet und ein Heizelement zwischen die beiden Kunststoffteile eingeführt, worauf die beiden Werkzeugteile einander angenähert werden, um die miteinander zu verschweißenden Randbereiche der beiden Kunststoffteile aufzuschmelzen (sh. Figuren 5 und 6), während die Kunststoffteile an den Werkzeugteilen gelagert sind. Nach dem erneuten Öffnen des Werkzeugs wird das Heizelement entfernt, worauf die Werkzeugteile samt den Kunststoffteilen gegeneinander gefahren und die aufgeschmolzenen Randbereiche der Kunststoffteile gegeneinandergepresst werden (Fig. 9). Die Art des Heizelements wird offengelassen, die Figuren 12 und 13 scheinen aber eine Variante des bekannten Verfahrens zu offenbaren, bei der die zu erhitzenden Randbereiche der beiden Kunststoffteile aufgeschmolzen werden, während sie das Heizelement nicht berühren.

Ein solches Verfahren, welches mit einer ähnlichen Vorrichtung durchgeführt wird, ergibt sich aus der EP 1 591 227 A1; in dieser bekannten Vorrichtung wird jedoch ein gegebenenfalls mehrteiliges Heizelement verwendet, dessen Heizflächen den miteinander zu verschweißenden Kunststoffteil-Bereichen ähnlich sein sollen.

Aus der JP 07-016945 A ergeben sich gleichfalls ein Verfahren und eine Vorrichtung, bei dem in einem zweiteiligen Spritzgusswerkzeug Halbschalen-artige Kunststoffteile hergestellt werden, die nach dem Öffnen des Spritzgusswerkzeugs an den Werkzeugteilen gehalten sind. Sodann werden die Werkzeugteile relativ zueinander so positioniert, dass die miteinander zu verschweißenden Randbereiche der Kunststoffteile einander gegenüberliegen, worauf die Werkzeugteile so aufeinanderzu bewegt werden, dass die miteinander zu verschweißenden Randbereiche der Kunststoffteile gegeneinander anliegen. Die Kunststoffteil-Randbereiche sind dabei so gestaltet, dass sie, wenn sie gegeneinander anliegen, Ringnuten bilden, durch welche Heißgas geleitet wird, um die Randbereiche zu erhitzen und anzuschmelzen. Sodann werden die erhitzten Kunststoffteil-Randbereiche gegeneinandergepresst, indem die Werkzeugteile noch weiter aufeinanderzu bewegt werden, um die Kunststoffteil-Randbereiche miteinander zu verschweißen.

Das Heißgas-Schweißen von Randbereichen zweier miteinander zu verbindender Kunststoffteile, welche in beliebiger Weise hergestellt worden sein können, ist aus folgenden Dokumenten bekannt: DE 100 19 163 A1, EP 1 415 789 A1, DE 10 2006 010 815 A1, JP 52-90584 A und US 4,450,038. Bei allen diesen bekannten Verfahren und Vorrichtungen werden mit dem Heißgas nur die miteinander zu verschweißenden Kunststoffteil-Randbereiche beaufschlagt und damit selektiv erhitzt, indem Schweißspiegel-artige Heizelemente verwendet werden, welche an ihren beiden den Kunststoffteil-Randbereichen zugewandten Seiten jeweils mit einer Reihe von Heißgas-Durchlassöffnungen versehen sind, wobei der Verlauf der Reihen von Heißgas-Durchlassöffnungen und die Orientierung der Heißgas-Durchlassöffnungen so an den Verlauf des jeweils zu erhitzenden Kunststoffteil-Randbereichs angepasst sind, dass nur diese Randbereiche erhitzt werden.

Schließlich ergeben sich auch aus der JP 2007-296700 A ein Verfahren und eine Vorrichtung zum Verschweißen von Randbereichen miteinander zu verbindender Kunststoffteile, wobei jedoch ein Schweißspiegel-ähnliches Heizelement verwendet wird, welches an seinen den miteinander zu verschweißenden Kunststoffteil-Randbereichen zugewandten beiden Seiten jeweils ein Muster von individuell ansteuerbaren Infrarotstrahlern aufweist, von denen nur denjenigen Infrarotstrahlern elektrische Energie zugeführt wird, welchen den zu erhitzenden Kunststoffteil-Randbereichen gegenüberliegen.

Der Erfindung liegt die Aufgabe zugrunde, ein Verfahren und eine Vorrichtung bereitzustellen, welches bzw. welche mit möglichst geringem konstruktivem Aufwand eine hochgenau und reproduzierbare Herstellung von Bauteilen der eingangs genannten Art ermöglicht.

Zur Lösung dieser Aufgabe sind die Merkmale der Ansprüche 1 und 5 vorgesehen. Vorteilhafte Ausführungsformen und zweckmäßige Weiterbildungen der Erfindung sind in den Unteransprüchen beschrieben.

Das erfindungsgemäße Verfahren dient zur Herstellung eines aus wenigstens zwei Kunststoffteilen bestehenden Bauteiles. Die Kunststoffteile werden mittels eines Spritzgußverfahrens in einer Spritzgußform hergestellt. Anschließend werden die Kunststoffteile in der Spritzgußform durch Schweißen miteinander verbunden.

Im einfachsten Fall werden durch den Schweiß-Prozess zwei Kunststoff-Teile miteinander verbunden. Generell können auch mehrere Kunststoff-Teile durch Schweißen miteinander verbunden werden.

Mit dem erfindungsgemäßen Verfahren können mit geringem konstruktivem Aufwand aus Kunststoffteilen bestehende Bauteile hergestellt werden, wobei die Herstellung reproduzierbar mit sehr hoher Genauigkeit erfolgen kann, das heißt mit dem erfindungsgemäßen Verfahren können Bauteile mit sehr geringen Toleranzen bereitgestellt werden. Weiterhin können mit dem erfindungsgemäßen Verfahren Bauteile hergestellt werden, die auch sehr hohen Reinheitsanforderungen genügen, da die zur Herstellung der Bauteile benötigten Verfahrensschritte, nämlich das Spritzgußverfahren zur Herstellung der Kunststoffteile und das Heißgas-Schweißen zur Herstellung der Verbindung der Kunststoffteile zur Bildung des Bauteils Prozesse bilden, die dahingehend sehr gut kontrollierbar sind, dass Verunreinigungen in den Kunststoffteilen beziehungsweise in dem daraus gefertigten Bauteil weitestgehend vermieden werden.
Ein wesentlicher Aspekt des erfindungsgemäßen Verfahrens besteht darin, dass die beiden Kunststoffteile in der Spritzgußform, in welcher diese durch das Spritzgußverfahren hergestellt werden, durch einen Heißgasschweiß-Prozess verbunden werden. Damit werden keine separaten Vorrichtungen zum Handling der Kunststoffteile, insbesondere zu deren Positionierung, Ausrichtung und anschließenden Lagefixierung benötigt, um dann nachfolgend die Kunststoffteile durch das Heißgas-Schweißen verbinden zu können, was die Arbeitszeiten und Herstellkosten der Bauteile erheblich senkt.
Ein noch bedeutenderer Vorteil dieser Maßnahme besteht jedoch darin, dass dadurch die Genauigkeit und Qualität der Herstellung der Bauteile erheblich erhöht wird.
Dies beruht darauf, dass die Spritzgußform, in welcher die Kunststoffteile hergestellt werden, naturgemäß die passgenauere Aufnahme für die Kunststoffteile bildet, um damit das nachfolgende Heißgas-Schweißen
durchzuführen. Da die Kunststoffteile während des gesamten Vorgangs zur Herstellung des Bauteils durch den Schweißvorgang in der originären Spritzgußform verbleiben, können Verzüge oder sonstige Formänderungen der Kunststoffteile vermieden werden, so dass Bauteile mit sehr geringen Toleranzen hergestellt werden können.

Die zur Durchführung des erfindungsgemäßen Verfahrens eingesetzte Spritzgußform weist ein Werkzeug mit wenigstens zwei gegeneinander positionierbaren Werkzeugteilen auf. Zur Herstellung der Kunststoffteile wird mittels des Spritzgußverfahrens das Werkzeug durch Zusammenfahren der Werkzeugteile geschlossen. Der Kunststoff wird in zwei von den Werkzeugteilen begrenzten, beabstandet liegenden Hohlräume eingespritzt.

Die simultane Herstellung beider Kunststoffteile in einer Spritzgußform ist eine wesentliche Voraussetzung dafür, dass nachfolgend in dieser Spritzgußform das Verbinden der Kunststoffteile durch das Heißgas-Schweißen erfolgen kann.

Hierzu wird nach Herstellung der Kunststoffteile mittels des Spritzgußverfahrens das Werkzeug geöffnet, und darauf die Werkzeugteile, an welchen jeweils eines der Kunststoffteile gelagert ist, so positioniert, dass die Kunststoffteile in einer Schweißposition angeordnet sind.

Vorteilhaft sind dabei in der Schweißposition die Kunststoffteile in Abstand gegenüberliegend angeordnet. Wesentlich hierbei ist, dass die Kunststoff-Teile in der Spritzgußform gelagert, ohne Verzüge und ohne Formänderungen in exakt definierten Positionen relativ zueinander angeordnet sind. Diese Genauigkeit wäre bei einer Entnahme der Kunststoff-Teile aus der Spritzgußform irreversibel zerstört.

Dann wird in der Schweißposition ein Heizelement in den Zwischenraum zwischen die Kunststoffteile eingebracht, wobei mit dem Heizelement zu verschweißende Randbereiche der Kunststoffteile erwärmt werden. Das Heizelement für Heißgas-Schweißen ist von einem Heizspiegel gebildet, mittels dessen die Randbereiche der Kunststoffteile berührungslos erwärmt werden.
Durch die berührungslose Erwärmung der Randbereiche der Kunststoffteile werden unerwünschte Verzüge oder Verformungen der Kunststoffteile vermieden. Zudem ist gewährleistet, dass keine unerwünschten Verunreinigungen der Kunststoffteile auftreten.
Nach der Erwärmung der Randbereiche der Kunststoffteile mittels des Heizelements wird dieses aus dem Zwischenraum entfernt, und durch Schließen des Werkzeugs werden die Kunststoffteile gegeneinander geführt, so dass diese an den erwärmten Randbereichen miteinander zu dem Bauteil verschweißt werden.
Da die Werkteile der Spritzgußform exakt an die Geometrien der Kunststoffteile angepasste Aufnahmen bilden, ist gewährleistet, dass die Kunststoffteile bei dem Schweißvorgang ihre Formen exakt beibehalten.
Nach dem Verschweißen wird das Werkzeug geöffnet und das Bauteil mittels Auswurfeinheiten aus der Spritzgußform entfernt.
Damit steht die Spritzgußform zur Herstellung neuer Kunststoffteile zur Verfügung, die dann nach dem erläuterten Verfahren wieder verschweißt werden können.
Die Erfindung wird im Folgenden anhand der Zeichnungen erläutert. Es zeigen:
- Figur 1:: Darstellung einer Spritzgußform bei geschlossenem Werkzeug zur Herstellung zweier Kunststoffteile durch ein Spritzgußverfahren.
- Figur 2:: Darstellung der Spritzform bei geöffnetem Werkzeug nach erfolgter Herstellung der Kunststoffteile, wobei jeweils an einem Werkzeugteil des Werkzeugs ein Kunststoffteil gelagert ist.
- Figur 3:: Darstellung der Spritzgußform bei in eine Schweißposition verfahrenem Kunststoffteil.
- Figur 4:: Anordnung gemäß Figur 3 mit einem Heizelement zwischen dem Kunststoffelement.
- Figur 5:: Darstellung der Spritzgußform bei geschlossenem Werkzeug zum Verschweißen der Kunststoffteile zu einem Bauteil.
- Figur 6:: Darstellung der Spritzgußform bei geöffnetem Werkzeug nach erfolgtem Verschweißen der Kunststoffteile.
- Figur 7:: Darstellung der Spritzgußform mit dem Werkzeug in einer Entnahmeposition für die Entnahme des Bauteils.
- Figur 8:: Anordnung gemäß Figur 7 bei Entformen des Bauteils.
- Figur 9:: Darstellung der Spritzgußform vor Durchführung eines erneuten Spritzgußvorgangs.

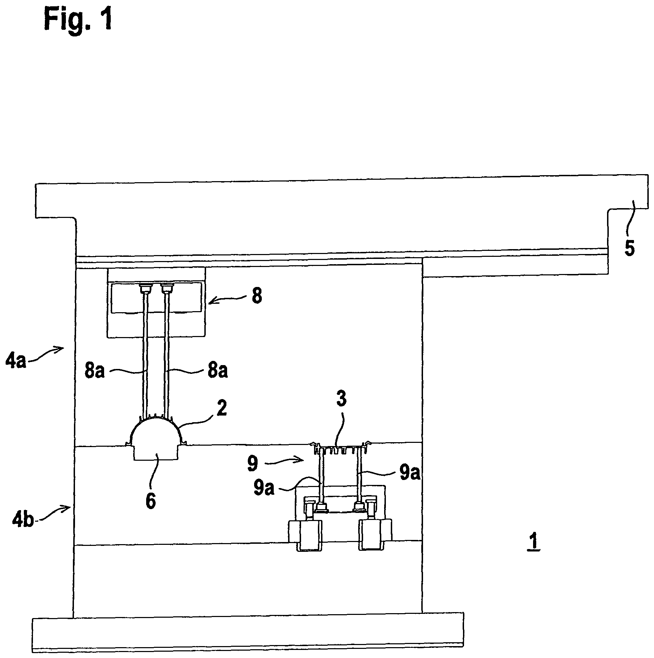

Die Figuren 1 bis 9 zeigen eine Ausführungsform der erfindungsgemäßen Vorrichtung mit einer Spritzgußform 1 zur Herstellung zweier Kunststoffteile 2, 3. Die Spritzgußform 1 umfasst ein Werkzeug mit zwei gegeneinander bewegbaren Werkzeugteilen 4a, 4b. Die Werkzeugteile 4a, 4b können durch einen nicht gesondert dargestellten Hebemechanismus in vertikaler Richtung aufeinander zubewegt beziehungsweise voneinander abgehoben werden. Zudem ist eine Führungsschiene 5 vorgesehen, mittels derer das obere Werkzeugteil 4a in horizontaler Richtung quer zum unterem Werkzeugteil 4b bewegt werden kann. Der Hebemechanismus und die Führungsschiene bilden Positioniermittel.

Wie insbesondere aus Figur 9 ersichtlich, welche die Werkzeugteile 4a, 4b ohne Kunststoffteile 2, 3 im geöffneten Zustand zeigt, weist jedes Werkzeugteil 4a, 4b Werkzeugeinsätze 6, 6a oder Kavitäten 7, 7a auf, die sich bei Schließen des Werkzeugs zu geschlossenen Hohlräumen ergänzen, in welche in einem Spritzgußvorgang Kunststoff eingespritzt wird, um damit die Kunststoffteile 2, 3 herzustellen. Den Kavitäten 7, 7a ist jeweils eine Auswurfeinheit 8, 9 mit motorisch betriebenen Auswurfstiften 8a, 9a zugeordnet. Mit den Auswurfeinheiten 8, 9 können fertiggestellte Kunststoffteile 2, 3 bei geöffnetem Werkzeug ausgeworfen werden.

Die Figuren 1 bis 9 zeigen die einzelnen Verfahrensschritte des erfindungsgemäßen Verfahrens.

Figur 1 zeigt die Spritzgußform 1 mit geschlossenem Werkzeug. In dieser Schließposition sind die Werkzeugteile so aufeinander zugefahren, dass die Werkzeugeinsätze 6, 6a und Kavitäten 7, 7a zwei Hohlräume ausbilden, in welche Kunststoff in einem Spritzguß-Vorgang eingespritzt wird um damit die bei den Kunststoffteilen 2, 3 herzustellen. Nach dem Einspritzen des Kunststoffs erfolgt in bekannter Weise ein Nachdrücken derart, dass die Werkzeugteile noch weiter gegeneinander gefahren werden, um einen vorgegebenen Druck auf die gerade erstellten Kunststoffteile 2, 3 auszuüben. Danach erfolgt ein Abkühlen der erstellten Kunststoffteile 2, 3 so dass diese in der Spritzgußform 1 ausgehärtet werden.

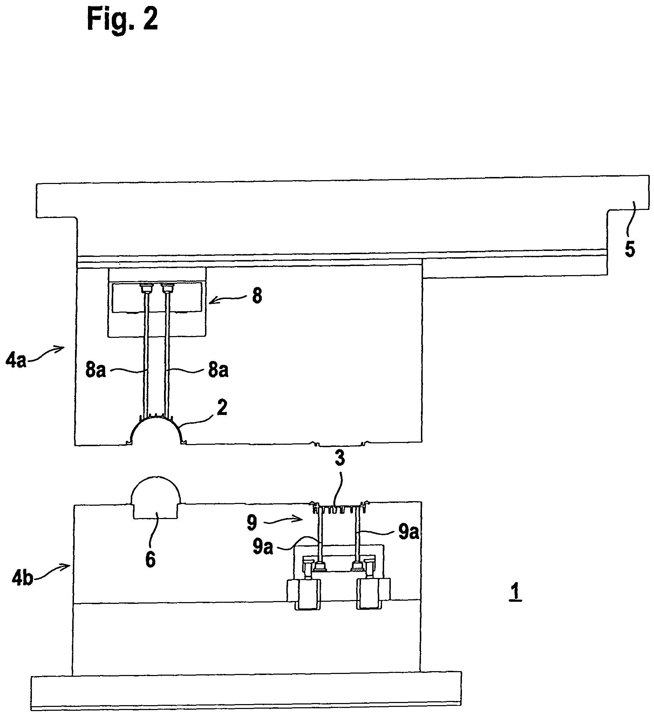

Nach dem so abgeschlossenen Spritzgußverfahren zur Herstellung der Kunststoffteile 2, 3 wird das Werkzeug durch Auseinanderfahren der Werkzeugteile 4a, 4b wie im Figur 2 dargestellt geöffnet. In dieser geöffneten Werkzeugposition ist das erste Kunststoffteil 2 am oberen Werkzeugteil 4a angeordnet und dort fixiert, während das zweite Kunststoffteil 3 am unteren Werkzeugteil 4b angeordnet und fixiert ist.

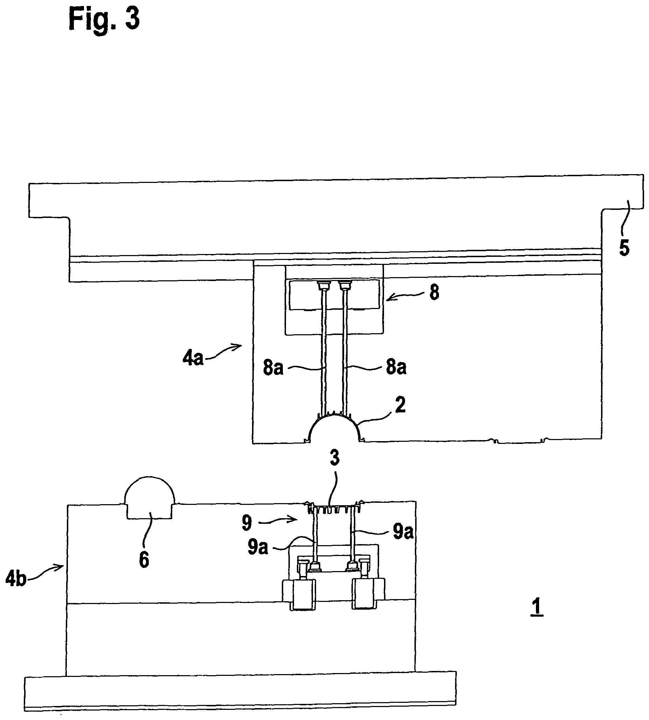

Anschließend erfolgt, wie in Figur 3 dargestellt, ein Einfahren der Kunststoff teile 2, 3 in eine Schweißposition. Hierzu wird das obere Werkzeugteil 4a mittels der Spritzgußform 1 verfahren, bis das Kunststoffteilteil 2 exakt oberhalb des Kunststoffteils 3 angeordnet ist, so dass die Kunststoffteile 2, 3 in Abstand gegenüberliegend angeordnet sind.

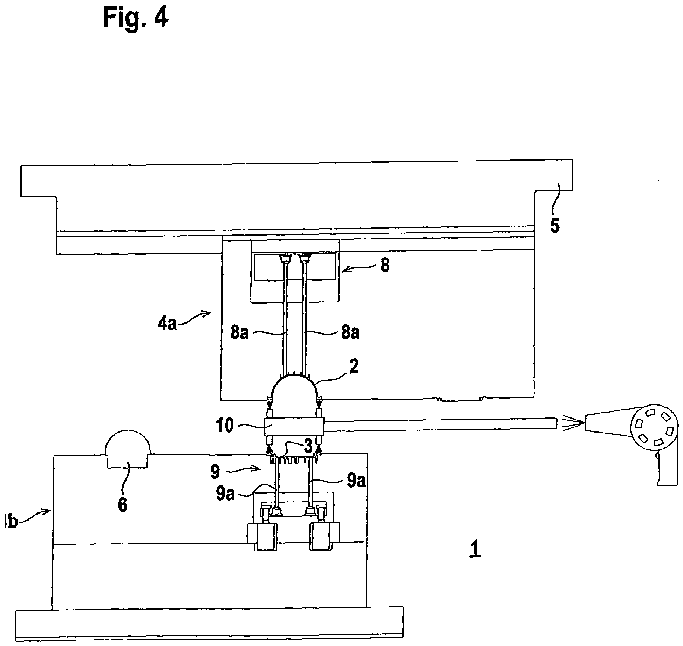

Zur Durchführung eines Heißgas-Schweißen-Prozesses wird, wie in Figur 4 dargestellt, in dem Zwischenraum zwischen den in der Schweißposition positionierten Kunststoffteilen 2, 3 ein Heizelement 10 eingebracht. Mit diesem Heizelement 10 erfolgt simultan eine berührungslose Erwärmung von Randbereichen beider Kunststoffteile 2, 3 wobei an diesen Randbereichen die Kunststoffteile 2, 3 später miteinander verschweißt werden sollen.

Das Heizelement 10 ist im vorliegenden Fall von einem Heizspiegel mit einem plattenförmigen Grundkörper gebildet, in welchem an der Ober- und Unterseite in definierte Sollpositionen, die an die Konturen der Randbereiche der Kunststoffteile 2, 3 angepasst sind, Löcher oder allgemein Öffnungen, insbesondere Düsenöffnungen, eingearbeitet werden. Durch diese Löcher wird Heißgas, insbesondere Heißluft, geblasen, so dass die Randbereiche der Kunststoffteile 2, 3 mit Heißgas beaufschlagt und dadurch erwärmt beziehungsweise angeschmolzen werden.

Nachdem mit dem Heizelement 10 die Randbereiche der Kunststoffteile 2, 3 erwärmt werden, wird das Heizelement 10 aus dem Zwischenram zwischen den Kunststoffteilen 2, 3 entfernt. Dann wird aus der Schweißposition heraus das Werkzeug geschlossen, wie in Figur 5 dargestellt. Dadurch werden die Kunststoffteile 2, 3 mit ihren vorab erwärmten Randbereichen aufeinander liegend gegeneinander gedrückt, wobei durch den ausgeübten Druck der Werkzeugteile 4a, 4b die Kunststoffteile 2, 3 miteinander zu einem Bauteil 11 verschweißt werden.

Nachdem durch den Schweißvorgang die Kunststoffteile 2, 3 fest zu dem Bauteil 11 verbunden worden sind, wird, wie in Figur 6 dargestellt, das Werkzeug durch Auseinanderfahren geöffnet. Durch Betätigen der Auswurfeinheit 9 wird dabei das Bauteil 11 von dem unterem Werkzeugtel 4b abgelöst, so dass bei geöffnetem Werkzeug das Bauteil 11 in der Kavität 7 des oberen Werkzeugteils 4a angeordnet und fixiert ist.

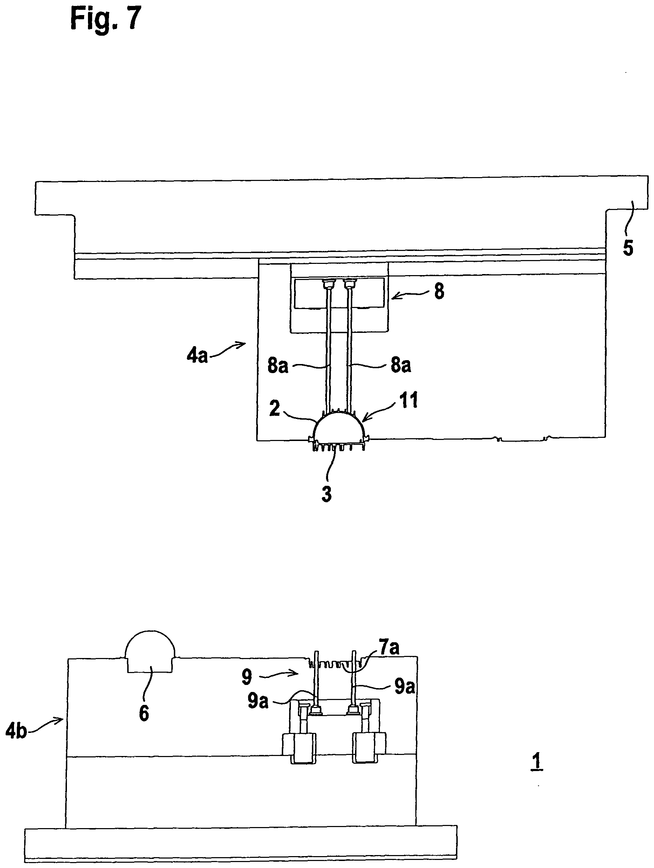

Anschließend wird das Werkzeug, wie in Figur 7 dargestellt, noch weiter geöffnet. Dadurch wird das Bauteil 11 in eine Entnahmeposition eingebracht.

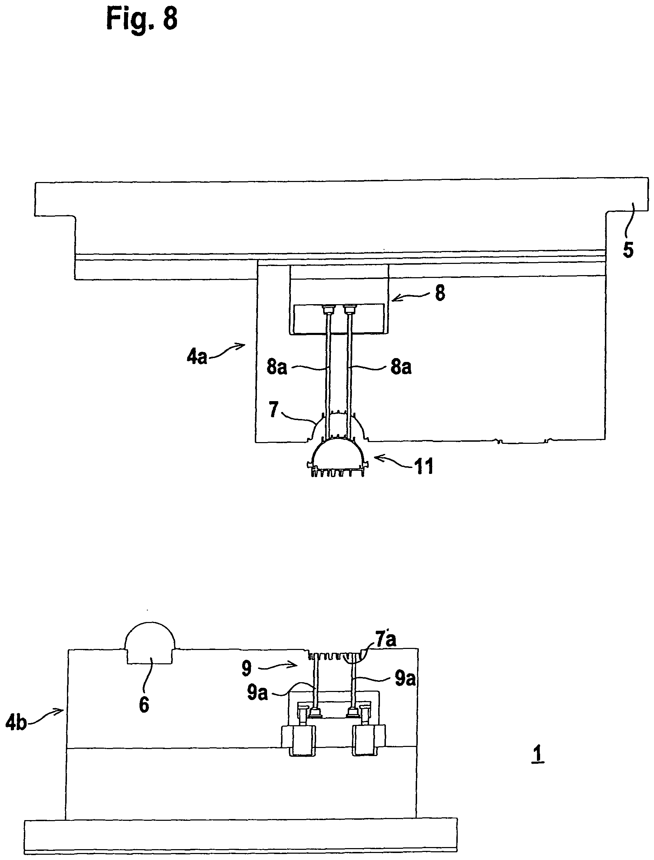

In dieser Entnahmeposition erfolgt, wie in Figur 8 dargestellt, das Entformen des Bauteils 11. Hierzu wird die Auswurfeinheit 8 betätigt, wodurch das Bauteil 11 aus der Kavität 7 des oberen Werkzeugs abgelöst wird.

Nach der Entformung des Bauteils 11 wird das Werkzeug in seine Spritzposition verfahren, welche in Figur 9 dargestellt ist. Hierzu wird das obere Werkzeugteil 4a entlang der Spritzgußform 1 verfahren, so dass dieses dem unteren Werkzeugteil 4b in Abstand gegenüberliegend angeordnet ist.

Aus der in Figur 9 dargestellten Spritzposition heraus, wird das Werkzeug wieder geschlossen, so dass wieder die in Figur 1 dargestellte Position des Werkzeugs eingenommen wird, in welcher von neuem durch einen SpritzgußVorgang neue Kunststoffteile 2, 3 hergestellt werden, die nachfolgend entsprechend den Figuren 2 bis 9 dargestellten Prozessfolge durch Heissgas-Schweißen miteinander verbunden werden.

### Bezugszeichenliste

- (1): Spritzgußform
- (2): Kunststoffteil
- (3): Kunststoffteil
- (4a): oberes Werkzeugteil
- (4b): unteres Werkzeugteil
- (5): Führungsschiene
- (6): Werkzeugeinsatz
- (6a): Werkzeugeinsatz
- (7): Kavität
- (7a): Kavität
- (8): Auswurfeinheit
- (8a): Auswurfstift
- (9): Auswurfeinheit
- (9a): Auswurfstift
- (10): Heizelement
- (11): Bauteil

## Patentansprüche

1. Verfahren zur Herstellung eines aus wenigstens zwei spritzgegossenen Kunststoffteilen (2, 3) bestehenden Bauteils (11) mittels einer Spritzgussform (1), welche ein Werkzeug mit wenigstens zwei gegeneinander positionierbaren Werkzeugteilen (4a, 4b) aufweist, wobei zur Herstellung der Kunststoffteile das Werkzeug durch Zusammenfahren der Werkzeugteile geschlossen und Kunststoff in wenigstens zwei von den Werkzeugteilen begrenzte, beabstandet liegende Hohlräume eingespritzt wird, nach Herstellung der Kunststoffteile (2, 3) das Werkzeug geöffnet wird und darauf die Werkzeugteile (4a, 4b), an welchen jeweils eines der Kunststoffteile gelagert ist, so positioniert werden, dass die Kunststoffteile in einer Schweißposition angeordnet sind, in welcher ein Heizelement (10) in einen Zwischenraum zwischen den Kunststoffteilen eingebracht wird und durch das Heizelement miteinander zu verschweißende Randbereiche der Kunststoffteile (2, 3) erwärmt werden, worauf das Heizelement (10) aus dem Zwischenraum entfernt wird und durch Schließen des Werkzeugs die Kunststoffteile (2, 3) so gegeneinander geführt werden, dass diese in ihren erwärmten Randbereichen in der Spritzgussform miteinander zu dem Bauteil (11) verschweißt werden, wobei für ein berührungsloses Erwärmen der durch Heißgasschweißen miteinander zu verschweißenden Kunststoffteil-Randbereiche als Heizelement ein Heizspiegel mit einem plattenförmigen Grundkörper verwendet wird, welcher an seinen beiden Seiten in an die Konturen der zu erwärmenden Kunststoffteil-Randbereiche angepassten Sollpositionen Heißgas-Durchlassöffnungen aufweist, durch welche Heißgas geblasen wird und so diese Kunststoffteil-Randbereiche mit Heißgas beaufschlagt werden.

2. Verfahren nach Anspruch 1, **dadurch gekennzeichnet, dass** in der Schweißposition die Kunststoffteile (2, 3) im Abstand voneinander und einander gegenüberliegend angeordnet sind.

3. Verfahren nach Anspruch 1 oder 2, **dadurch gekennzeichnet, dass** nach dem Verschweißen der Kunststoffteile (2, 3) das Werkzeug (4a, 4b) geöffnet und das Bauteil (11) mittels Auswurfeinheiten (8a) aus der Spritzgussform (1) entfernt wird.

4. Verfahren nach Anspruch 3, **dadurch gekennzeichnet, dass** nach dem Entfernen des Bauteils (11) aus der Spritzgussform (1) in dieser von Neuem Kunststoffteile (2, 3) hergestellt werden, die anschließend in der Spritzgussform durch Heißgasschweißen miteinander verbunden werden.

5. Vorrichtung zur Herstellung eines aus wenigstens zwei spritzgegossenen Kunststoffteilen (2, 3) bestehenden Bauteils (11) mittels einer Spritzgussform (1), welcher Mittel zum Einspritzen von Kunststoff zugeordnet sind und die ein öffen- und schließbares Werkzeug mit wenigstens zwei gegeneinander positionierbaren Werkzeugteilen (4a, 4b) aufweist, die zum Schließen des Werkzeugs zusammenfahrbar sind und bei geschlossenem Werkzeug wenigstens zwei von den Werkzeugteilen begrenzte, beabstandet liegende Hohlräume bilden, in welche zur Herstellung der Kunststoffteile Kunststoff einspritzbar ist, wobei jedes Werkzeugteil zum Lagern eines Kunststoffteils bei geöffnetem Werkzeug ausgebildet ist und bei geöffnetem Werkzeug die Werkzeugteile samt Kunststoffteilen so positionierbar sind, dass die Kunststoffteile in einer Schweißposition angeordnet sind, in welcher ein Heizelement (10) zum Erwärmen miteinander zu verschweißender Randbereiche der Kunststoffteile in einen Zwischenraum zwischen den Kunststoffteilen einbringbar ist, und wobei nach dem Entfernen des Heizelements aus dem Zwischenraum zum Schließen des Werkzeugs die Werkzeugteile samt den Kunststoffteilen so gegeneinander führbar sind, dass die Kunst-stoffteile in ihren erwärmten Randbereichen in der Spritzgussform miteinander zu dem Bauteil (11) verschweißt werden, **dadurch gekennzeichnet, dass** für ein berührungsloses Erwärmen der durch Heißgasschweißen miteinander zu verschweißenden Kunststoffteil-Randbereiche das Heizelement als Heizspiegel mit einem plattenförmigen Grundkörper ausgebildet ist, welcher an seinen beiden Seiten in an die Konturen der zu erwärmenden Kunststoffteil-Randbereiche angepassten Sollpositionen Heißgas-Durchlassöffnungen aufweist, durch welche Heißgas blasbar ist und so diese Kunststoffteil-Randbereiche mit Heißgas beaufschlagbar sind.

## Claims

1. A method for producing a component (11) consisting of at least two injection-moulded plastics parts (2,3) by means of an injection mould (1), which comprises a tool with at least two tool parts (4a,4b) which are positionable relative to each other, wherein for production of the plastics parts the tool is closed by moving the tool parts together and a plastics material is injected into at least two spaced-apart cavities delimited by the tool parts, after production of the plastics parts (2,3) the tool is opened and then the tool parts (4a,4b), on each of which one of the plastics parts is supported, are so positioned that the plastics parts are arranged in a welding position, in which a heating element (10) is introduced into an intermediate space between the plastics parts and edge regions of the plastics parts (2,3) which are to be welded to each other are heated, after which the heating element (10) is removed from the intermediate space and by closing the tool the plastics parts (2,3) are so guided against each other that they are welded to each other in their heated edge regions within the injection mould to form the component (11), wherein for a contactless heating of the plastics part edge regions to be welded to each other by hot gas welding there is used as the heating element a heating mirror with a plate-like base body, which has at both its sides, in desired positions matched to the contours of the plastics part edge regions to be heated, hot gas outlet openings through which hot gas is blown and so these plastics part edge regions are exposed to hot gas.

2. A method according to claim 1, **characterised in that** in the welding position the plastics parts (2,3) are arranged at a spacing from each other and opposite each other.

3. A method according to claim 1 or 2, **characterised in that** after the welding of the plastics parts (2,3) the tool (4a,4b) is opened and the component (11) is removed from the injection mould (1) by ejection units (8a).

4. A method according to claim 3, **characterised in that**, after the removal of the component (11) from the injection mould (1), plastics parts (2,3) are produced anew therein, which are then connected to each other in the injection mould by hot gas welding.

5. A device for producing a component (11) consisting of at least two injection-moulded plastics parts (2,3) by means of an injection mould (1), with which means are associated for the injection of plastics material and which comprises an openable and closable tool with at least two tool parts (4a,4b) which are positionable relative to each other, which are moveable together to close the tool and which, with the tool closed, form at least two spaced-apart cavities delimited by the tool parts, the plastics material being injectable into the cavities for production of the plastics parts, wherein each tool part is configured to support a plastics part with the tool open, and with the tool open the tool parts together with the plastics parts are so positionable that the plastics parts are arranged in a welding position, in which a heating element (10) for heating edge regions of the plastics parts which are to be welded to each other is introducible into an intermediate space between the plastics parts, and wherein, after the removal of the heating element from the intermediate space, the tool parts together with the plastics parts are so guidable together to close the tool that the plastics parts are welded together in their heated edge regions within the injection mould to form the component (11), **characterised in that**, for a contactless heating of the plastics part edge regions to be welded to each other by hot gas welding, the heating element is formed as a heating mirror with a plate-like base body which has at both its sides, in desired positions matched to the contours of the plastics part edge regions to be heated, hot gas outlet openings through which hot gas is blowable and thus these plastics part edge regions are exposable to hot gas.

## Revendications

1. Procédé de fabrication d'une pièce (11) constituée d'au moins deux parties en matière plastique (2, 3) moulées par injection au moyen d'un moule de moulage par injection (1), lequel présente un outil pourvu d'au moins deux parties d'outil (4a, 4b) pouvant être positionnées l'une contre l'autre, l'outil, pour la fabrication des parties en matière plastique, étant fermé par rapprochement des parties d'outil et la matière plastique étant injectée dans au moins deux cavités délimitées par les parties d'outil et espacées l'une de l'autre, l'outil étant ouvert une fois les parties en matière plastique (2, 3) fabriquées, après quoi les parties d'outil (4a, 4b), sur lesquelles est montée chacune des parties en matière plastique, sont positionnées de telle manière que les parties en matière plastique sont agencées dans une position de soudage dans laquelle un élément chauffant (10) est introduit dans un espace intermédiaire entre les parties en matière plastique et des zones marginales à souder les unes aux autres des parties en matière plastique (2, 3) sont chauffées par l'élément chauffant, après quoi l'élément chauffant (10) est retiré de l'espace intermédiaire et, à la suite de la fermeture de l'outil, les parties en matière plastique (2, 3) sont guidées l'une contre l'autre de manière à être soudées l'une à l'autre dans le moule de moulage par injection dans leurs zones marginales chauffées pour obtenir la pièce (11), sachant que pour un chauffage sans contact des zones marginales à souder les unes aux autres par soudage au gaz chaud des parties en matière plastique, on utilise comme élément chauffant un miroir chauffant présentant un corps de base en forme de plaque, lequel comporte au niveau de ses deux faces, dans des positions théoriques adaptées aux contours des zones marginales à chauffer des parties en matière plastique, des ouvertures de passage pour le gaz chaud à travers lesquelles le gaz chaud est soufflé et ces zones marginales des parties en matière plastique sont ainsi soumises à l'effet du gaz chaud.

2. Procédé selon la revendication 1, **caractérisé en ce que**, dans la position de soudage, les parties en matière plastique (2, 3) sont agencées à distance l'une de l'autre et à l'opposé l'une de l'autre.

3. Procédé selon la revendication 1 ou 2, **caractérisé en ce que**, une fois les parties en matière plastique (2, 3) soudées, l'outil (4a, 4b) est ouvert et la pièce (11) est démoulée du moule de moulage par injection (1) au moyen d'unités d'éjection (8a).

4. Procédé selon la revendication 3, **caractérisé en ce que**, une fois la pièce (11) démoulée du moule de moulage par injection (1), des parties en matière plastique (2, 3) sont de nouveau fabriquées dans ce dernier, et sont ensuite reliées l'une à l'autre dans le moule de moulage par injection par soudage au gaz chaud.

5. Dispositif de fabrication d'une pièce (11) constituée d'au moins deux parties en matière plastique (2, 3) moulées par injection au moyen d'un moule de moulage par injection (1), auquel sont associés des moyens pour l'injection de matière plastique et qui comprend un outil pouvant être ouvert et fermé pourvu d'au moins deux parties d'outil (4a, 4b) pouvant être positionnées l'une contre l'autre, qui peuvent être rapprochées pour fermer l'outil et qui forment, lorsque l'outil est fermé, au moins deux cavités délimitées par les parties d'outil et espacées l'une de l'autre, dans lesquelles peut être injectée la matière plastique pour la fabrication des parties en matière plastique, chaque partie d'outil étant conçue pour loger une partie en matière plastique lorsque l'outil est ouvert et, lorsque l'outil est ouvert, les parties d'outil, et avec elles les parties en matière plastique, pouvant être positionnées de telle sorte que les parties en matière plastique sont agencées dans une position de soudage dans laquelle un élément chauffant (10), pour chauffer des zones marginales à souder les unes aux autres des parties en matière plastique, peut être introduit dans un espace intermédiaire entre les parties en matière plastique, et, une fois l'élément chauffant retiré de l'espace intermédiaire, les parties d'outil, et avec elles les parties en matière plastique, pouvant ainsi être guidées l'une vers l'autre pour fermer l'outil, de sorte que les parties en matière plastique sont soudées l'une à l'autre dans le moule de moulage par injection dans leurs zones marginales chauffées de manière à obtenir la pièce (11), **caractérisé en ce que**, pour un chauffage sans contact des zones marginales à souder les unes aux autres par soudage au gaz chaud des parties en matière plastique, l'élément chauffant est réalisé sous la forme d'un miroir chauffant comprenant un corps de base en forme de plaque, lequel présente, sur ses deux faces, dans des positions théoriques adaptées aux contours des zones marginales à chauffer des parties en matière plastique, des ouvertures de passage pour le gaz chaud à travers lesquelles le gaz chaud peut être soufflé et ces zones marginales des pièces en matière plastique peuvent ainsi être soumises à l'effet du gaz chaud.
